# EUROPEAN PATENT APPLICATION

(11) **EP 4 391 163 A1**
(43) Date of publication of application: **26.06.2024**
(21) Application number: 22926858.6
(22) Date of filing: 07.12.2022
(51) Int. Cl.: H01M 50/15, H01M 50/547, H01M 50/552, H01M 50/531

(54) **BATTERY CELL, BATTERY, AND POWERED DEVICE**

(30) Priority: 21.02.2022 CN 202220349707 U
(71) Applicant: Contemporary Amperex Technology Co., Limited, Ningde City, Fujian 352100 (CN)
(72) Inventor: XU, Liangfan, Ningde City, Fujian 352100 (CN); ZHANG, Qianqian, Ningde City, Fujian 352100 (CN); XU, Hu, Ningde City, Fujian 352100 (CN); LI, Xing, Ningde City, Fujian 352100 (CN); NIU, Shaojun, Ningde City, Fujian 352100 (CN); JIN, Haizu, Ningde City, Fujian 352100 (CN)
(74) Representative: Gong, Jinping
(86) International application number: PCT/CN2022/137256
(87) International publication number: WO 2023/155555

(57) **Abstract**

This application provides a battery cell, a battery, and an electric device. The battery cell includes: an electrode assembly; a housing, where the housing has a first opening for accommodating the electrode assembly; an end cover configured to cover the first opening, where the end cover has a protruding structure, the protruding structure protrudes along a first direction away from the interior of the battery cell, and the first direction is a thickness direction of the end cover; and an electrode terminal, where the electrode terminal has a protruding portion protruding from the protruding structure along a second direction, and the second direction is perpendicular to the first direction. The battery cells are interconnected in the second direction through the protruding portions of the electrode terminals, which can enhance the strength of the connection between the battery cells, thereby reducing the number of cross beams or partitions to be provided between battery modules, and improving the utilization of space inside the battery.

## Description

This application claims priority to Chinese Patent Application No. 202220349707.3, filed with the China National Intellectual Property Administration on February 21, 2022 and entitled "BATTERY CELL, BATTERY, AND ELECTRIC DEVICE", which is incorporated herein by reference in its entirety.

### TECHNICAL FIELD

This application relates to the technical field of batteries, and in particular, to a battery cell, a battery, and an electric device.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development. How the utilization of space inside the battery is improved is an urgent issue to be resolved.

### SUMMARY

In view of the foregoing issue, embodiments of this application provide a battery cell, a battery, and an electric device so as to improve the utilization of space inside the battery.

According to a first aspect, this application provides a battery cell including: an electrode assembly; a housing, where the housing has a first opening for accommodating the electrode assembly; an end cover configured to cover the first opening, where the end cover has a protruding structure, the protruding structure protrudes along a first direction away from the interior of the battery cell, and the first direction is a thickness direction of the end cover; and an electrode terminal, where the electrode terminal has a protruding portion protruding from the protruding structure along a second direction, and the second direction is perpendicular to the first direction.

In the battery cell provided in an embodiment of this application, the electrode terminal protrudes from the end cover through the protruding structure in the second direction, such that the battery cells arranged along the second direction can be directly connected to each other through the protruding portions of the electrode terminals to achieve electrical connection, which not only reduces the number of cross beams or partitions to be provided between battery modules and improves the utilization of space inside the batteries, but also improves the strength of the connection between the battery cells.

In some embodiments, the end cover has a step structure, where the step structure is formed on surfaces and a portion of the end cover other than the protruding structure that are far away from the interior of the battery cell, and the protruding portion of the electrode terminal is at least partially accommodated in a space formed by the step structure.

The step structure on the end cover provides a space for the electrode terminal such that the protruding portion of the electrode terminal protruding from the protruding structure along the second direction does not need to take up additional space inside the battery, thereby ensuring a reasonable utilization of the space inside the battery and improving the utilization of the space inside the battery.

In some embodiments, the electrode assembly has a tab, the end cover has a concave portion corresponding to the protruding structure on a side facing the battery cell, and the concave portion is configured to accommodate the tab.

This can rationally utilize space in the battery cell and increase the energy density of the battery cell. Even in a case that the battery includes a plurality of battery cells, this can also improve the utilization of space inside the battery, which is beneficial to increasing the energy density of the battery. In addition, the concave portion on the end cover can also reduce the materials consumed in the production process and reduce the production costs.

In some embodiments, the battery cell further includes a connecting member provided within the concave portion and including a first member and a second member connected to each other, where the first member is perpendicular to the first direction for connecting to the tab, and the second member is bent toward the interior of the battery cell with respect to the first member for connecting to the electrode terminal.

The first member and the second member are interconnected but not in a same plane, such that the electrical connection between the electrode terminal and the tab can be implemented through the connecting member of a larger area. This arrangement can still ensure normal power supply function of the battery cell even in a case that the battery cell has the electrode terminal protruding from the protruding structure along the second direction, and can also guarantee the stability of the current of the battery cell during use of the battery cell.

In some embodiments, the battery cell includes a first electrode terminal and a second electrode terminal, where the first electrode terminal and the second electrode terminal have opposite polarities and are provided at two ends of the protruding structure in the second direction respectively.

The first electrode terminal and the second electrode terminal are respectively provided at the two ends of the protruding structure in the second direction, facilitating series connection of the plurality of battery cells arranged along the second direction.

In some embodiments, the protruding structure is cuboid-shaped and the electrode terminal is provided on a surface of the protruding structure perpendicular to the second direction.

This can make the protruding portion be relatively regular in shape, relatively uniform in size, and easy to process. In addition, this can also make the protruding portions of the electrode terminals on the protruding structure more stable, so as to ensure the strength of the connection between the electrode terminals of adjacent battery cells.

In some embodiments, the protruding portion of the electrode terminal is strip-shaped.

This can make the protruding portion of the electrode terminal have a cross-sectional area as large as possible in a cross section perpendicular to the second direction, such that it has an area as large as possible for electrical connection with the electrode terminals of adjacent battery cells, enhancing the strength of the connection between the electrode terminals, thereby enhancing the strength of the connection between the battery cells. In addition, this can reduce the number of cross beams or partitions to be provided between the battery modules, so as to improve the utilization of the space inside the battery.

According to a second aspect, this application provides a battery including the battery cell according to the foregoing embodiments and a box, where the box is configured to accommodate the battery cell.

In the battery provided in the embodiments of this application, a plurality of battery cells are interconnected in the second direction through the protruding portions of the electrode terminals protruding from the protruding structures, which can enhance the strength of the connection between the battery cells, thereby reducing the number of cross beams or partitions to be provided between battery modules, and improving the utilization of space inside the battery.

In some embodiments, the electrode terminals of adjacent battery cells in the second direction are directly connected.

This can reduce the number of connecting portions to be consumed in connecting the electrode terminals of adjacent battery cells and reduce the production costs. In addition, the directly connected electrode terminals can also enhance the strength of the connection between the battery cells, thereby reducing the number of cross beams or partitions to be provided between battery modules, and improving the utilization of space inside the battery.

In some embodiments, the electrode terminals of adjacent battery cells in the second direction are welded to each other.

Welding can make the connection between two adjacent electrode terminals tighter, ensure the strength of the connection of the electrode terminals, and enhance the strength of the connection between the battery cells, thereby reducing the number of cross beams or partitions to be provided between battery modules, and improving the utilization of space inside the battery. In addition, isomorphic welding can also make the electrical connection between adjacent battery cells tighter, ensuring the normal use of the battery.

In some embodiments, a bonding member is provided between the housings of adjacent battery cells for bonding the adjacent battery cells.

Arrangement of the bonding member between the housings of the adjacent battery cells can further enhance the strength of the connection between the adjacent battery cells, and the bonding member can be properly adjusted in a case that a size of the protruding portion of the electrode terminal has a certain error, so as to ensure the tight connection of the electrode terminals of the adjacent battery cells and improve the strength of the connection between the battery cells, thereby reducing the number of cross beams or partitions to be provided between the battery modules, and improving the utilization of the space inside the battery.

According to a third aspect, this application provides an electric device including the battery according to the foregoing embodiments, where the battery is configured to supply electric energy for the electric device.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural diagram of a battery cell according to some embodiments of this application;
FIG. 4 is a schematic top view of an end cover of a battery cell according to some embodiments of this application;
FIG. 5 is a cross-sectional view of the end cover of the battery cell illustrated in FIG. 4 along direction A-A; and
FIG. 6 is a schematic diagram of a plurality of battery cells connected according to some embodiments of this application.

Reference signs in specific embodiments are as follows:
1. vehicle;
10. battery; 11. box; 20. battery cell; 30. controller; 40. motor;
21. electrode assembly; 211. tab; 211a. first tab; 211b. second tab; 212. connecting member; 212a. first member; 212b. second member; 22. housing; 221. first opening; 23. end cover; 231. protruding structure; 232. electrode terminal; 232a. first electrode terminal; 232b. second electrode terminal;
H. first direction; W. second direction; and T. third direction.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

The orientation terms appearing in the following description all are directions shown in the figures, and do not limit the specific structure of the application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery cells is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together. The separator may be made of polypropylene (polypropylene, PP), polyethylene (polyethylene, PE), or the like. In addition, the electrode assembly may be a wound structure or a stacked structure. However, the embodiments of this application are not limited thereto.

To meet different power requirements, the battery may include a plurality of battery cells, and the plurality of battery cells may be connected in series, parallel, or series-parallel, where being connected in series-parallel means a combination of series and parallel connections. Optionally, the plurality of battery cells may be connected in series, parallel, or series-parallel to form a battery module first, and then the plurality of battery modules are connected in series, parallel, or series-parallel to form a battery. In a word, the plurality of battery cells may be directly combined into a battery, or may first be combined into battery modules that are then combined into a battery. The battery is then disposed in an electric device to provide electric energy for the electric device.

For the development of battery technologies, various design factors need to be considered, for example, performance parameters such as energy density, cycle life, discharge capacity, and charge and discharge rate. To meet the high-performance demand for batteries in the new energy market, the utilization of space inside the battery is an aspect to be considered.

A battery typically includes a plurality of battery cells, and electrical connection, for example, parallel connection, series connection, or series-parallel connection, between the plurality of battery cells is often implemented inside the battery through a busbar. Specifically, the busbar can implement the electrical connection between the battery cells by connecting electrode terminals of the battery cells. However, the battery cells connected through the busbar tend to form a suspended structure, and the busbar is also susceptible to damage due to external forces, for example, fracture due to impact. Therefore, cross beams or partitions are typically added between the battery modules formed by the plurality of battery cells to enhance the strength between the battery cells. However, in this approach, the cross beams or partitions inevitably occupy space inside the battery, resulting in less space occupied by the battery cells inside the battery and lower energy density of the battery.

In view of this, this application provides a battery cell, where an electrode terminal of the battery cell has a portion protruding from an end cover in a direction perpendicular to a thickness of the end cover, such that adjacent battery cells can be electrically connected through direct connection between electrode terminals, which can enhance the strength of the connection between the battery cells, thereby reducing the number of cross beams or partitions in the battery, improving the utilization of space inside the battery, and increasing the energy density of the battery.

The technical solutions described in the embodiments of this application are all applicable to a variety of electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

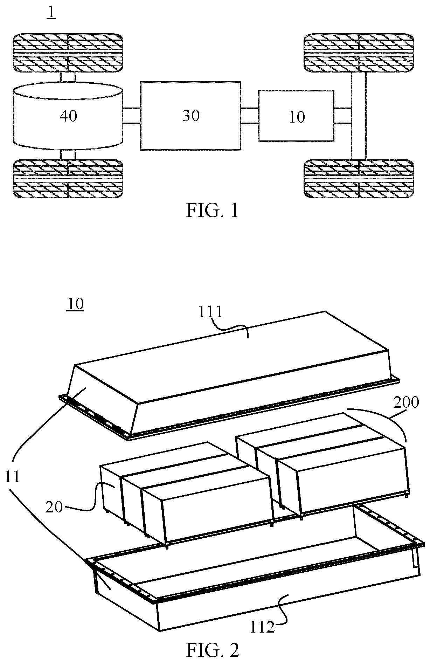

For example, FIG. 1 is a schematic structural diagram of a vehicle 1 according to an embodiment of this application. The vehicle 1 may be a fossil fuel vehicle, a natural gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, the plurality of battery cells may be connected in series, parallel, or series-parallel to form a battery module first, and then the plurality of battery modules are connected in series, parallel, or series-parallel to form a battery. In a word, the plurality of battery cells may be directly combined into a battery, or may first be combined into battery modules that are then combined into a battery.

For example, FIG. 2 is a schematic structural diagram of a battery 10 according to an embodiment of this application. The battery 10 may include at least one battery module 200. The battery module 200 includes a plurality of battery cells 20. The battery 10 may further include a box 11. Inside of the box 11 is a hollow structure. The plurality of battery cells 20 are accommodated in the box 11. FIG. 2 shows a possible implementation of the box 11 in the embodiments of this application. As shown in FIG. 2, the box 11 may include two portions that are referred as a first box portion 111 and a second box portion 112, where the first box portion 111 and the second box portion 112 are snap-fitted. Shapes of the first box portion 111 and the second box portion 112 may be determined according to a shape of a combination of the battery module 200. At least one of the first box portion 111 and the second box portion 112 is provided with an opening. For example, as shown in FIG. 2, the first box portion 111 and the second box portion 112 each may be a hollow cuboid and have only one face with an opening, where an opening of the first box portion 111 and an opening of the second box portion 112 are opposite each other, and the first box portion 111 and the second box portion 112 are snap-fitted to form a box 11 having an enclosed chamber.

For another example, unlike FIG. 2, it is possible that only one of the first box portion 111 and the second box portion 112 is a hollow cuboid with an opening, and the other may be a plate for covering the opening. For example, an example is used where the second box portion 112 is a hollow cuboid and has only one face with an opening and the first box portion 111 is a plate. Therefore, the first box portion 111 covers the opening of the second box portion 112 to form a box 11 with an enclosed chamber. The chamber may be configured for accommodating the plurality of battery cells 20. The plurality of battery cells 20 are connected in parallel, in series, or in series-parallel, and then put into the box 11 formed after the first box portion 111 and the second box portion 112 are snap-fitted.

Depending on different power needs, battery cells 20 in the battery module 200 may be provided in any quantity. The plurality of battery cells 20 may be connected in series, parallel, or series-parallel to achieve greater capacity or power. Because each battery 10 may include a large quantity of battery cells 20, for ease of installation, the battery cells 20 may be disposed by group, and each group of battery cells 20 form a battery module 200. The quantity of battery cells 20 included in the battery module 200 is not limited, and may be set as required.

The battery 10 may include a plurality of battery modules 200. These battery modules 200 may be connected in series, parallel, or series-parallel.

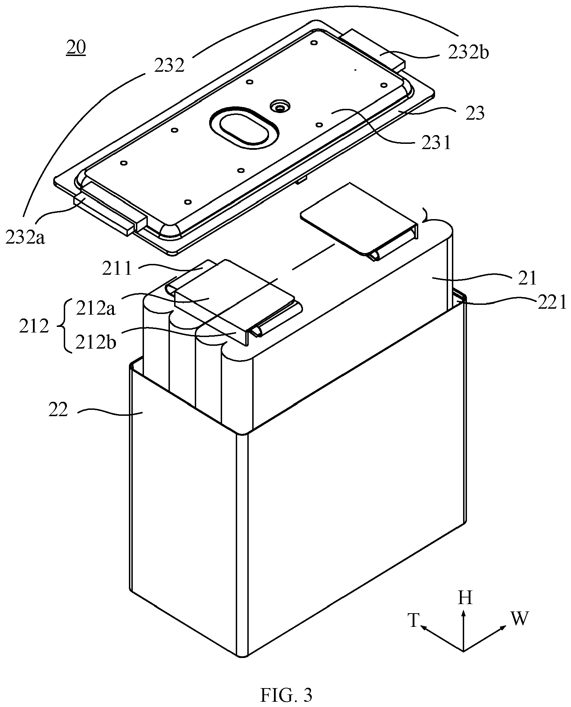

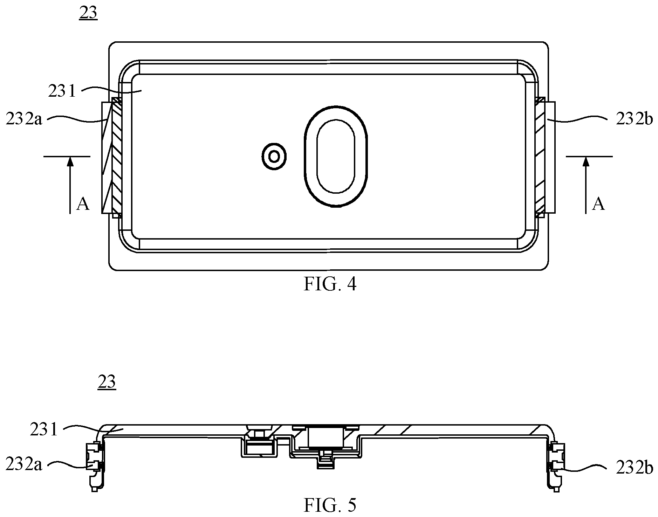

The battery cell 20 provided in the embodiments of this application is described in detail below with reference to FIG. 3 to FIG. 5.

FIG. 3 to FIG. 5 are schematic structural diagrams of a battery cell 20 according to an embodiment of this application. The battery cell 20 includes an electrode assembly 21, a housing 22, an end cover 23, and an electrode terminal 232. The housing 22 has a first opening 221 for accommodating the electrode assembly 21; the end cover 23 is configured to cover the first opening 221, and the end cover 23 has a protruding structure 231, where the protruding structure 231 protrudes along a first direction H away from the interior of the battery cell 20, and the first direction H is a thickness direction of the end cover 23; and the electrode terminal 232 has a protruding portion protruding from the protruding structure 231 along a second direction W, where the second direction W is perpendicular to the first direction H.

For ease of understanding and description, the embodiments provided in this application are illustrated only with a prismatic battery cell, and it should be understood that the embodiments provided in this application do not impose a limitation on the shape of the battery 10.

The electrode assembly 21 is a component in the battery cell 20 in which electrochemical reactions take place. The electrode assembly 21 may be cylindrical, cuboid, or the like. If the electrode assembly 21 is a cylindrical structure, the housing 22 may also be a cylindrical structure. If the electrode assembly 21 is a cuboid structure, the housing 22 may alternatively be a cuboid structure. As shown in FIG. 3 to FIG. 5, each electrode assembly 21 may have a first tab 211a and a second tab 211b. The first tab 211a and the second tab 211b have opposite polarities. For example, when the first tab 211a is a positive tab 211, the second tab 211b is a negative tab 211. The positive tab 211 may be produced by a portion of a positive electrode plate uncoated with a positive electrode active material layer through stacking, and the negative tab 211 may be produced by a portion of a negative electrode plate uncoated with a negative electrode active material layer through stacking. The first tab 211a of the one or more electrode assemblies 21 is connected to an electrode terminal 232 through one connecting member 212, and the second tab 211b of the one or more electrode assemblies 21 is connected to the other electrode terminal 232 through another connecting member 212. For example, the positive electrode terminal 232 is connected to the positive tab 211 through one connecting member 212, and the negative electrode terminal 232 is connected to the negative tab 211 through another connecting member 212.

In the battery cell 20, one or more electrode assemblies 21 may be provided in the housing 22 depending on actual use demands. For example, as shown in FIG. 3, four independent electrode assemblies 21 are provided in the battery cell 20.

The housing 22 is a component configured to accommodate the electrode assembly 21. The housing 22 may be a hollow structure with an opening formed at one end; or the housing 22 may be a hollow structure with openings formed at two opposite ends. If the housing 22 is a hollow structure with an opening formed at one end, one end cover 23 may be provided. If the housing 22 is a hollow structure with openings formed at two opposite ends, two end covers 23 may be provided, where the two end covers 23 cover the openings at two ends of the housing 22 respectively. The housing 22 may be made of various materials, such as copper, iron, aluminum, steel, and aluminum alloy. The housing 22 may have a variety of shapes, for example, cylinder, cuboid, or the like. The housing 22 is determined depending on a shape of a combination of the one or more electrode assemblies 21. For example, the housing 22 may be a hollow cuboid, cube, or cylinder, and one face of the housing 22 has an opening such that the one or more electrode assemblies 21 can be put into the housing 22. For example, when the housing 22 is a hollow cuboid or cube, one face of the housing 22 is an opening face, which means that the face has no wall so that the inside and the outside of the housing 22 are communicated. When the housing 22 is a hollow cylinder, the end face of the housing 22 is an opening face, which means that the end face has no wall so that the inside and the outside of the housing 22 are communicated. The end cover 23 covers the opening and joins the housing 22 to form an enclosed cavity for accommodating the electrode assembly 21. For example, in FIG. 3, the housing 22 is a cuboid structure. The housing 22 is a hollow structure with a first opening 221. Walls of the housing 22 and the end cover 23 are referred to as walls of the battery cell 20. As a cuboid-shaped battery cell 20, the walls of the housing 22 include a bottom wall and four side walls. The housing 22 is filled with an electrolyte such as a liquid electrolyte.

The end cover 23 is a component that covers the opening of the housing 22 to isolate an internal environment of the battery cell 20 from an external environment. The end cover 23 may match the housing 22 in shape. As shown in FIG. 3, the housing 22 is a cuboid structure. The end cover 23 is a rectangular plate structure that matches the housing 22. The end cover 23 may also be made of various materials such as copper, iron, aluminum, steel, and aluminum alloy. The end cover 23 and the housing 22 may be made of same or different materials.

The end cover 23 may have a protruding structure 231, where the protruding structure 231 protrudes along a first direction H away from the interior of the battery cell 20. As shown in FIG. 3 to FIG. 5, the first direction H is a thickness direction of the end cover 23, to be specific, the protruding structure 231 protrudes in the thickness direction of the end cover 23 away from the interior of the battery cell 20. The protruding structure 231 may be solid, to be specific, a surface of the protruding structure 231 on the end cover 23 and a surface of the portion of the end cover 23 other than the protruding structure 231, facing the interior of the battery cell 20, are in the same plane; and the protruding structure 231 may alternatively be hollow, to be specific, the protruding structure 231 has a corresponding concave portion on a side facing the interior of the battery cell 20 with respect to a portion of the end cover 23 other than the protruding structure 231. An edge of the portion of the protruding structure 231 protruding from the end cover 23 may have a chamfered structure or a rounded structure.

The battery cell 20 may further include electrode terminals 232, specifically, may include two electrode terminals 232, for example, a first electrode terminal 232a and a second electrode terminal 232b, namely, a positive electrode terminal 232 and a negative electrode terminal 232. The electrode terminal 232 may be provided on the end cover 23. In the battery cell 20 provided in this embodiment of this application, the electrode terminal 232 have a protruding portion protruding from the protruding structure 231 on the end cover 23 along a second direction W, where the second direction W is perpendicular to the first direction H. When the edge of the protruding structure 231 on the end cover 23 has a chamfered structure or a rounded structure, the protruding portion of the electrode terminal 232 may be a portion of the electrode terminal 232 protruding from the protruding structure 231 along the edge of the chamfered structure or the rounded structure. It should be understood that the direction W in FIG. 3 is only an example of the second direction, and in a possible case, a direction T perpendicular to the first direction H in FIG. 3 may also be the second direction, and this application is illustrated only with the second direction being the direction W as an example, and does not limit the second direction to the direction W in FIG. 3. Moreover, the first direction H and the second direction W pointed by arrows in FIG. 3 are schematic and do not indicate specific orientations, to be specific, the first direction H and the second direction W indicate directions parallel to the straight lines where the arrows in the figure are located.

In the battery cell 20 provided in this embodiment of this application, the electrode terminal 232 protrudes from the protruding structure 231 on the end cover 23 along the second direction W, such that such battery cells 20 arranged along the second direction W can be directly connected to each other through the protruding portions of the electrode terminals 232 to achieve electrical connection, enhancing the strength of the connection between the battery cells 20, thereby reducing the number of cross beams or partitions to be provided between the battery modules 200, and improving the utilization of space inside the battery 10.

According to some embodiments of this application, optionally, the end cover 23 has a step structure, where the step structure is formed on surfaces of the protruding structure 231 and a portion of the end cover 23 other than the protruding structure 231 that are far away from the interior of the battery cell 20, and the protruding portion of the electrode terminal 232 is at least partially accommodated in a space formed by the step structure.

If the surface of the protruding structure 231 on the end cover 23 far away from the interior of the battery cell 20 and the surface of the portion of the end cover 23 far away from the interior of the battery cell 20 other than the protruding structure 231 are parallel to each other and the two planes that are parallel to each other have a certain distance from each other, the two planes that have the certain distance from each other can be formed into a step structure. As can be seen in FIG. 3 to FIG. 5, the step structure may be formed at an edge of the end cover 23, to be specific, the step structure can be formed around the edges of the end cover 23. The protruding portion of the electrode terminal 232 protrudes from the protruding structure 231 along the second direction W and can be accommodated in the step structure. Depending on practical needs, the protruding portion of the electrode terminal 232 may extend beyond the edge of the end cover 23 along the second direction W. The portion that does not extend beyond the edge of the end cover 23 may still be accommodated in the step structure formed by the protruding structure 231 and the portion of the end cover 23 other than the protruding structure 231.

The step structure on the end cover 23 provides a space for the electrode terminal 232 such that the protruding portion of the electrode terminal 232 protruding from the protruding structure 231 along the second direction does not need to take up additional space inside the battery 10, thereby ensuring a reasonable utilization of the space inside the battery 10 and improving the utilization of the space inside the battery 10.

According to some embodiments of this application, optionally, the protruding structure 231 is cuboid-shaped, and the electrode terminal 232 is provided on a surface of the protruding structure 231 perpendicular to the second direction W.

The protruding structure 231 on the end cover 23 may be cuboid-shaped and includes four sides parallel to an end face of the end cover 23 and perpendicular to the end face. The protruding portion of the electrode terminal 232 may protrude from the surface of the protruding structure 231 perpendicular to the second direction W, that is, the sides of the cuboid-shaped protruding structure 231.

This can make the shape of the protruding portion more regular and the size more uniform, which is easy to process, and can also make the protruding portions of the electrode terminals 232 on the protruding structure 231 more stable, so as to ensure the strength of the connection between the electrode terminals 232 of adjacent battery cells 20.

According to some embodiments of this application, optionally, the protruding portion of the electrode terminal 232 is strip-shaped.

The electrode terminal 232 may be set into different shapes, such as a cylindrical shape and a cuboid shape, as desired. In this embodiment of this application, the protruding portion of the electrode terminal 232 may protrude along one side of the protruding structure 231 on the end cover 23, and its size of a cross section perpendicular to the second direction W may be slightly smaller than a size of the protruding structure 231 in the same cross section. For example, a length of the protruding portion in the third direction T may be slightly smaller than a length of the side of the protruding structure 231, and a thickness of the protruding portion in the first direction H may be slightly smaller than a thickness of the protruding structure 231. The thickness of the protruding structure 231 refers to, on a surface of the end cover 23 far away from the interior of the battery cell 20, a distance between a surface of the protruding structure 231 parallel to the end cover 23 and a surface of a portion of the end cover 23 other than the protruding structure 231. The protruding portion is strip-shaped.

This can make the protruding portion of the electrode terminal 232 have as a cross-sectional area as large as possible in a cross section perpendicular to the second direction W, such that it has an area as large possible for electrical connection with the electrode terminals 232 of adjacent battery cells 20, enhancing the strength of the connection between the electrode terminals 232, thereby enhancing the strength of the connection between the battery cells 20. In addition, this can reduce the number of cross beams or partitions to be provided between the battery modules 200, so as to improve the utilization of the space inside the battery 10.

According to some embodiments of this application, optionally, the electrode assembly 21 has a tab 211, the end cover 23 has a concave portion corresponding to the protruding structure 231 on a side facing the battery cell 20, and the concave portion is configured to accommodate the tab 211.

The protruding structure 231 on the end cover 23 may be hollow, to be specific, the end cover 23 has a concave portion corresponding to the protruding structure 231, on the side facing the battery cell 20. The space formed by the concave portion can be utilized inside the battery cell 20 to accommodate the tab 211 of the electrode assembly 21 without having to additionally reserve a space in the end cover 23 with the protruding structure 231 for accommodating the electrode assembly 21.

This can rationally utilize space in the battery cell 20 and increase the energy density of the battery cell 20. Even in a case that the battery 10 includes a plurality of battery cells 20, this can also improve the utilization of space inside the battery 10, which is beneficial to increasing the energy density of the battery 10. In addition, the concave portion on the end cover 23 can also reduce the materials consumed in the production process and reduce the production costs.

According to some embodiments of this application, optionally, the battery cell 20 further includes a connecting member 212 provided within the concave portion and including a first member 212a and a second member 212b connected to each other, where the first member 212a is perpendicular to the first direction H for connecting to the tab 211, and the second member 212b is bent toward the interior of the battery cell 20 with respect to the first member 212a for connecting to the electrode terminal 232.

The connecting member 212, which may also be called a current collection member, is located between the end cover 23 and the electrode assembly 21 and is configured to electrically connect the electrode assembly 21 to the electrode terminal 232. Each electrode terminal 232 is provided with one connecting member 212 correspondingly.

In this embodiment of this application, the electrode terminal 232 protrudes from the protruding structure 231 along the second direction W, and the tab 211 of the electrode assembly 21 protrudes from the electrode assembly 21 along the first direction H. To achieve the electrical connection between the electrode terminal 232 and the electrode assembly 21, the connecting member 212 in this embodiment of this application includes a first member 212a and a second member 212b connected to each other. The first member 212a is perpendicular to the first direction H and connected to the tab 211; and the second member 212b is perpendicular to the second direction W and connected to the electrode terminal 232. The second member 212b may alternatively not be completely perpendicular to the second direction W. As can be seen in FIG. 3, the electrical connection between the tabs 211 protruding in different directions and the electrode terminals 232 can also be implemented through the first member 212a and the second member 212b connected to each other only if the second member 212b is bent toward the interior of the battery cell 20 with respect to the first member 212a.

In addition, the connecting member 212 may also be provided in a concave portion on the end cover 23 to reasonably utilize the space in the battery cell 20.

The first member 212a and the second member 212b are interconnected but not in the same plane, such that the electrical connection between the electrode terminal 232 and the tab 211 can be implemented through the connecting member 212 of a larger area. This arrangement can still ensure normal power supply function of the battery cell 20 even in a case that the battery cell 20 has the electrode terminal 232 protruding from the protruding structure 231 along the second direction W, and can also guarantee the stability of the current of the battery cell 20 during use of the battery cell 20.

According to some embodiments of this application, optionally, the battery cell 20 includes a first electrode terminal 232a and a second electrode terminal 232b, where the first electrode terminal 232a and the second electrode terminal 232b have opposite polarities and are provided at two ends of the protruding structure 231 in the second direction W respectively.

The electrode terminal 232 of the battery cell 20 may be the first electrode terminal 232a or to the second electrode terminal 232b. In the first electrode terminal 232a and the second electrode terminal 232b, one may be a positive electrode terminal 232, and the other may be a negative electrode terminal 232. The positive electrode terminal 232 is electrically connected to the positive electrode tab 211 through the connecting member 212, and the negative electrode terminal 232 is electrically connected to the negative electrode tab 211 through the connecting member 212.

The first electrode terminal 232a and the second electrode terminal 232b may be provided at two ends of the protruding structure 231 in the second direction W, for example, may be provided on two surfaces of the protruding structure 231 perpendicular to the second direction W.

The first electrode terminal 232a and the second electrode terminal 232b are respectively provided at the two ends of the protruding structure 231 in the second direction W, facilitating series connection of a plurality of battery cells 20 arranged along the second direction W.

According to some embodiments of this application, this application further provides a battery including the battery cell 20 according to the foregoing embodiments, and a box 11 for accommodating the battery cell 20.

In the battery 10 provided in the embodiments of this application, a plurality of battery cells 20 are interconnected in the second direction W through the protruding portions of the electrode terminals 232 protruding from the protruding structures 231, which can enhance the strength of the connection between the battery cells 20, thereby reducing the number of cross beams or partitions to be provided between battery modules 200, and improving the utilization of space inside the battery 10.

According to some embodiments of this application, optionally, the electrode terminals 232 of adjacent battery cells 20 in the second direction W are directly connected.

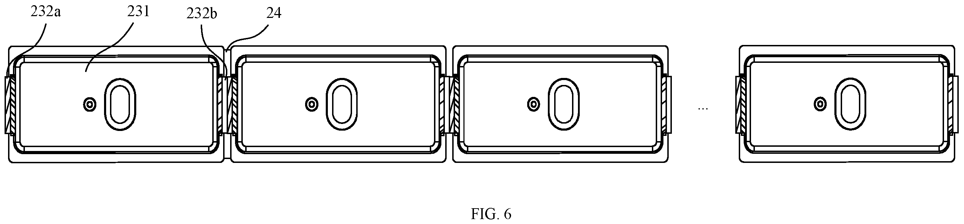

As shown in FIG. 6, FIG. 6 is a schematic diagram of a plurality of battery cells connected. The electrode terminals 232 of the battery cells 20 protrude from the protruding structure 231 along the second direction W. The electrode terminals 232 of adjacent battery cells 20 in the second direction W are then connected to each other to realize the electrical connection of the adjacent battery cells 20. The electrode terminals 232 of the adjacent battery cells 20 may be indirectly connected, for example, through a busbar; or may be directly connected, where the direct connection means that the electrode terminals 232 of the adjacent battery cells 20 are directly contacted and electrically connected with no need of other components to realize the electrical connection of the adjacent battery cells 20. When the polarities of the two electrode terminals 232 directly connected are opposite, the two battery cells 20 connected through the electrode terminals 232 are connected in series.

This can reduce the number of connecting portions to be consumed in connecting the electrode terminals 232 of adjacent battery cells 20 and reduce the production costs. In addition, the directly connected electrode terminals 232 can also enhance the strength of the connection between the battery cells 20, thereby reducing the number of cross beams or partitions to be provided between battery modules 200, and improving the utilization of space inside the battery 10.

According to some embodiments of this application, optionally, the electrode terminals 232 of adjacent battery cells 20 are welded to each other in the second direction W.

The two electrode terminals 232 directly connected may be connected through mutual welding, for example, brazing.

Welding can make the connection between two adjacent electrode terminals 232 tighter, ensure the strength of the connection between the electrode terminals 232, and enhance the strength of the connection between the battery cells 20, thereby reducing the number of cross beams or partitions to be provided between battery modules 200, and improving the utilization of space inside the battery 10. In addition, isomorphic welding can also make the electrical connection between adjacent battery cells 20 tighter, ensuring the normal use of the battery 10.

According to some embodiments of this application, optionally, a bonding member 24 is provided between the housings 22 of adjacent battery cells 20 for bonding the adjacent battery cells 20.

The bonding member 24 may be applied on the housings 22 of the adjacent battery cells 20, for example, portions of the adjacent battery cells 20 that are in contact with each other, to facilitate bonding the housings 22 of the adjacent battery cells 20.

In a possible implementation, the bonding member 24 may have a certain thickness and may also have a certain elasticity. For example, when the electrode terminals 232 of the adjacent battery cells 20 are in contact with each other, if there is a gap between the housings 22 of the two battery cells 20, the gap can be filled by the bonding member 24 having a certain thickness; and if the thickness of the bonding member 24 is relatively large such that the electrode terminals 232 of the adjacent battery cells 20 cannot come into contact with each other, the two electrode terminals 232 can be made to be in contact with each other by squeezing the bonding member 24 having a certain elasticity.

Arrangement of the bonding member 24 between the housings 22 of the adjacent battery cells 20 can further enhance the strength of the connection between the adjacent battery cells 20, and the bonding member 24 can be properly adjusted in a case that a size of the protruding portion of the electrode terminal 232 has a certain error, so as to ensure the tight connection of the electrode terminals 232 of the adjacent battery cells 20 and improve the strength of the connection between the battery cells 20, thereby reducing the number of cross beams or partitions to be provided between the battery modules 200, and improving the utilization of the space inside the battery 10.

According to some embodiments of this application, this application further provides an electric device including the battery cell 10 described in the foregoing embodiments, where the battery cell 10 is configured to supply electric energy to the electric device.

The foregoing descriptions are merely specific examples of this application, but are not intended to limit the protection scope of this application. Any equivalent modifications or replacements readily figured out by persons skilled in the art within the technical scope disclosed in this application shall fall within the protection scope of this application. Therefore, the protection scope of this application shall be subject to the protection scope of the claims.

## Claims

1. A battery cell (20), **characterized by** comprising:
an electrode assembly (21);
a housing (22), wherein the housing (22) has a first opening (221) for accommodating the electrode assembly (21);
an end cover (23) configured to cover the first opening (221), wherein the end cover (23) has a protruding structure (231), the protruding structure (231) protrudes along a first direction (H) away from the interior of the battery cell (20), and the first direction (H) is a thickness direction of the end cover (23); and
an electrode terminal (232), wherein the electrode terminal (232) has a protruding portion protruding from the protruding structure (231) along a second direction (W), and the second direction (W) is perpendicular to the first direction (H).

2. The battery cell (20) according to claim 1, **characterized in that** the end cover (23) has a step structure, wherein the step structure is formed on surfaces of the protruding structure (231) and a portion of the end cover (23) other than the protruding structure (231) that are far away from the interior of the battery cell (20), and the protruding portion of the electrode terminal (232) is at least partially accommodated in a space formed by the step structure.

3. The battery cell (20) according to claim 1 or 2, **characterized in that** the electrode assembly (21) has a tab (211), the end cover (23) has a concave portion corresponding to the protruding structure (231) on a side facing the battery cell (20), and the concave portion is configured to accommodate the tab (211).

4. The battery cell (20) according to claim 3, **characterized in that** the battery cell (20) further comprises:
a connecting member (212) provided within the concave portion and comprising a first member (212a) and a second member (212b) connected to each other, wherein the first member (212a) is perpendicular to the first direction (H) for connecting to the tab (211), and the second member (212b) is bent toward the interior of the battery cell (20) with respect to the first member (212a) for connecting to the electrode terminal (232).

5. The battery cell (20) according to any one of claims 1 to 4, **characterized in that** the battery cell (20) comprises a first electrode terminal (232a) and a second electrode terminal (232b), wherein the first electrode terminal (232a) and the second electrode terminal (232b) have opposite polarities and are provided at two ends of the protruding structure (231) in the second direction (W) respectively.

6. The battery cell (20) according to any one of claims 1 to 5, **characterized in that** the protruding structure (231) is cuboid-shaped, and the electrode terminal (232) is provided on a surface of the protruding structure (231) perpendicular to the second direction (W).

7. The battery cell (20) according to any one of claims 1 to 6, **characterized in that** the protruding portion of the electrode terminal (232) is strip-shaped.

8. A battery (10), **characterized by** comprising:
the battery cell (20) according to any one of claims 1 to 7; and
a box (11), wherein the box (11) is configured to accommodate the battery cell (20).

9. The battery (10) according to claim 8, **characterized in that** the electrode terminals (232) of adjacent battery cells (20) in the second direction (W) are directly connected.

10. The battery (10) according to claim 9, **characterized in that** the electrode terminals (232) of the adjacent battery cells (20) in the second direction (W) are welded to each other.

11. The battery (10) according to any one of claims 8 to 10, **characterized in that** a bonding member (24) is provided between the housings (22) of adjacent battery cells (20) for bonding the adjacent battery cells (20).

12. An electric device, **characterized by** comprising the battery (10) according to any one of claims 8 to 11, wherein the battery (10) is configured to provide electric energy for the electric device.
